**Europäisches Patentamt**

**European Patent Office**

**Office européen des brevets**

(19)

(11) Publication number: **0 070 124**
**B1**

(12) **EUROPEAN PATENT SPECIFICATION**

(45) Date of publication of patent specification: **20.11.86**

(51) Int. Cl.⁴: **G 01 N 27/56,** G 01 N 17/00

(21) Application number: **82303443.4**

(22) Date of filing: **01.07.82**

(54) **A method of detecting and quantifying damage in metal structures.**

(30) Priority: **09.07.81 GB 8121178**

(43) Date of publication of application:
**19.01.83 Bulletin 83/03**

(45) Publication of the grant of the patent:
**20.11.86 Bulletin 86/47**

(84) Designated Contracting States:
**AT BE CH DE FR GB IT LI NL SE**

(56) References cited:
**FR-A-2 346 709**
**LU-A- 39 669**
**US-A-4 003 815**
**US-A-4 019 129**
**US-A-4 160 702**
**US-A-4 217 180**
**US-A-4 240 892**

(73) Proprietor: **McNamee, David Fleming**
**318 Albert Drive**
**Glasgow G41 5EB Scotland (GB)**

(72) Inventor: **McNamee, David Fleming**
**318 Albert Drive**
**Glasgow G41 5EB Scotland (GB)**

(74) Representative: **Pattullo, Norman**
**Ian G. Murgitroyd and Company Mitchell House**
**333 Bath Street**
**Glasgow G2 4ER Scotland (GB)**

Courier Press, Leamington Spa, England.

## Description

This invention relates to a method of detecting and quantifying the occurrence of damage in metal structures. Such structural damage can occur as a result of stress within the structure or the affect upon the structure of an external force or cause. Thus, the kinds of damage which can occur are, for example, surface yielding, surface cracking for both static and fatigue loading, or any event or process which exposes fresh surface.

Two well known phenomena are relevant to certain methods of detecting and quantifying structural damage to metal. The first of these is known as Stress Corrosion, which is a form of local electro-chemical activity which can occur in zones of high stress when metal structures or components are present in a corrosive liquid environment. A comprehensive description of Stress Corrosion Cracking can be found in Shrier, L. L., Corrosion, J. Wiley and Sons, New York (1963). The second phenomenon, pioneered by Farmery and Evans (J. Inst. of Metals, 84, 413 (1955—6)), is known as Strain Electrometry, wherein if a metal specimen electrode is immersed in a conducting liquid and joined electrically through a voltmeter to a reference electrode, a voltage difference can be established between the two electrodes if the metal electrode is strained in tension.

For reasons of practicality, the Stress Corrosion technique is unacceptable because of the corrosive effect on the structure. Furthermore the Strain Electrometry technique, in its known form yields 'only a transient potential which reaches a maximum in a fraction of a second and decays to the original potential in a time of the order of a few seconds' (Funk, A. J., et al Zeitschrift fur Phys Chemil, NF, 15(1958)).

Other electrochemical methods such as Riggs' determination of the effectiveness of stress relief treatments, U.S. Patent 4,240,892, Dec. 23, 1980, and Baxter's impressed current method of quantifying damage in fatigue specimens, U.S. Patent 4,160,702, July 10, 1979, can be used to identify structural damage. Neither can be used for real-time inspection of metal structures having large surface areas. However there are two ways in which a strain electrometric method can be used for this application. These are measurements of a change in circuit resistance and of a change in local surface potentials. It is the latter of these changes with which the present invention is concerned.

The electro-chemical potential of a particular metal is the potential in volts between an electrode of the metal and a standard reference electrode in an electrolyte with certain known properties.

Certain metals in certain electrolytes demonstrate a phenomenon in that the potential of the metal electrode changes with time following immersion until a more or less stable potential is attained. This potential change, in the more noble direction, is known as passivation.

Once the surface of the metal electrode has become passivated and its electro-chemical potential has settle down to a more or less constant level the subsequent appearance of yielding or cracking produces fresh surface which sets up a battery effect between the fresh surface and the previously passivated surface. The flow of current between the two surface areas tends to de-passivate the previously passivated surface and this change in surface potential can be measured.

The present invention is based upon the appreciation that with an electrolyte having certain chemical properties, whilst the flow of current takes place during a few seconds, the slightly de-passivated surface can take a number of hours to recover the original passivated potential. During this period there is an electrical signal which can be easily measured and recorded, provided that the input impedance of the voltmeter used to measure the potential change, is sufficient to prevent significant flow of current between the two electrodes.

According to the present invention there is provided a method of detecting and quantifying the occurrence of damage in ferrous metal structures comprising the steps of providing an electrolytic cell wherein, as one electrode, the metal structure to be monitored and at least one reference electrode are at least partially immersed in an electrolyte having properties which cause passivation of the immersed surface of the metal structure and at least partial de-passivation thereof when a flow of current to the passivated surface is established by exposure of non-passivated surface in the event of damage to be detected and quantified, characterised in that, once the said surface has been initially passivated and subsequently partially de-passivated, any change in the electrochemical potential of the immersed metal structure is detected, wherein the electro-chemical potential of the immersed metal structure is measured by a voltmeter connected between the latter and the reference electrode, said voltmeter having a sufficient high impedance to prevent significant current flow therethrough, wherein the system is calibrated to relate the change of potential to the amount of damage and preferably wherein said reference electrode is of the same material as said metal structure.

An embodiment of the invention will now be described, by way of example only, with reference to the accompanying drawings in which:—

Figure 1 is a diagram of a laboratory apparatus for demonstrating this method;
Figure 2 is a graph of experimental results;
Figure 3 is a diagram of a laboratory apparatus for demonstrating an aspect of the method;
Figure 4 is a graph of experimental results;
Figure 5 is a diagram of a laboratory apparatus for demonstrating another aspect of the method;
Figure 6 is a graph of experimental results;

Figure 7 is a diagram of a laboratory apparatus for demonstrating another aspect of the method;

Figure 8 is a diagram of a laboratory apparatus for demonstrating another aspect of the method; and

Figures 9 and 10 show equipment for carrying out the method in a number of practical applications.

The method to be described is derived from work already published on the subject of straight electrometry but is improved in that long life signals can be produced.

Strain electrometry, in laboratory practice consists of straining a specimen in an electrolyte and measuring the change in voltage between the specimen and another electrode, which may be a similar specimen, a saturated calomel electrode or any other suitable electrode, the measurement of voltage being made on a voltmeter with a very high internal resistance, e.g. one having an input impedance of the order of $2 \times 10^{12}$ ohms. The signal produced by straining has a life which is usually measured in tens of seconds, which means that slowly developing damage is almost undetectable. This short life is more pronounced when the electrolyte includes a corrosion inhibitor. This can be demonstrated by the following experiment.

Experiment 1

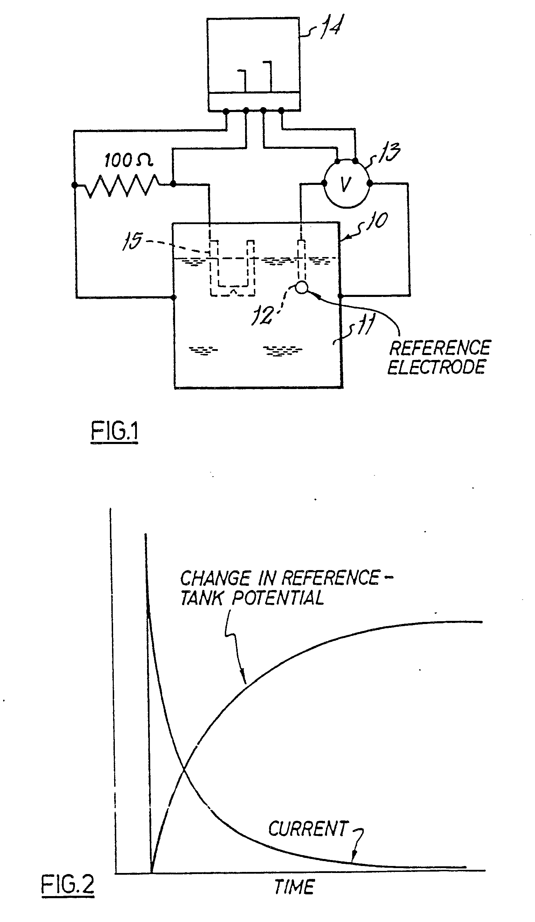

With reference to Figure 1, an electrolyte is prepared containing a corrosion inhibitor taken from the selection reported in strain electrometry literature. A 250 mm deep by 250 mm diameter uncoated steel tank 10 is partially filled with the electrolyte 11. A reference electrode 12 is placed in the electrolyte and connected to the metal of the tank through a voltmeter 13, having an input impedance of $2 \times 10^{12}$ ohms. An output signal from the voltmeter is fed to a recording voltmeter 14. A notch crack specimen 15 is manufactured from the same material as the tank 10 and the specimen is connected to the tank through a 100 ohm resistor. The input terminals of another channel of the recording voltmeter 14 are connected across this resistor, and thus the current flowing through the resistor is given as:—

$$\text{current (amps)} = \frac{\text{Voltage reading}}{100}$$

The voltage change between the reference electrode 12 and the tank 10 and the voltage drop across the 100 ohm resistor will be recorded.

The notch crack specimen is partially immersed in the electrolyte. A reference voltage and current signal should then be produced, both of which display a sharp rise followed by a rapid decay. When the reference signal is stable the notch is cracked and it can be observed that the current and reference signals will both show a rapid rise followed by a rapid decay.

As a means of locating damage by electrochemical technique, the system described above is impracticable for two reasons. Firstly, it is not usually possible to insert an ammeter between the damage site and the remainder of the structure except when simulated damage is being created, and secondly, the signals recorded by the reference electrode are of such short duration that slowly developing damage is impossible to detect.

An experiment will now be described wherein signals having longer duration can be produced through the reference electrode, thus rendering the method more practicable.

Experiment 2

Apparatus similar to the one shown in Figure 1 is set up, but without an electrolyte and using a simple cylindrical bar 10 mm in diameter of the same material as the tank 10 in place of the notch crack specimen 15. An electrolyte is prepared by dissolving sodium nitrite in distilled water to give a conductivity in the region of $0.25 \times 10^4 \ \mu\Omega^{-1}$ cm$^{-1}$.

The electrolyte is introduced into the tank, and the initial reference to tank voltage is found to be about $+400$ mV falling in the course of 24 or 48 hours to between $-50$ mV and $-100$ mV. When a stable voltage has been obtained i.e., the internal tank surface has become passivated, the following test can be performed.

The 10 mm diameter rod is abraded at one end, using dry emery paper, and this end is dipped into the electrolyte. The change in reference-to-tank voltage and the current flow through 10 ohm resistor are recorded and it is noted that while the current flow has the high initial value, rapid decay, characteristic, the reference-to-tank voltage rises but does not decay. This is illustrated by the graph of Figure 2.

The essential features of these results are that the electro-chemical activity, as measured by the current flowing between the rod (anode) and tank (cathode) is still a rapidly decaying transient but that the potential of the tank surface measured against the reference electrode shows a change which is sustained long after the anode to cathode current has become negligibly small.

This may be further demonstrated by repeating the test but withdrawing the rod from the electrolyte after 5 to 10 seconds. The withdrawal will cause the flow of current to cease but the change in reference-to-tank voltage will be maintained despite the absence of the original cause of the change, namely the rod.

This change in tank surface potential is not permanent and in the course of the following 12 or 24 hours the surface re-passivates and the tank potential will return to the value obtaining before the rod was placed in the electrolyte.

This experiment may also be carried out using a notch crack specimen or a similar U-shaped specimen which will yield rather than crack, but the principles are all adequately demonstrated using a abraded rod.

## The practical method

In the description to follow the term 'tank' should be construed as any component, structure or vessel made from carbon or stainless steel and the electrolyte used is sodium nitrite in distilled water with a conductivity of $0.25 \times 10^4$ $\mu\Omega^{-1}cm^{-1}$.

The surface of the tank which will be in contact with the electrolyte should be in any one or several of the following conditions, namely machined, grit or shot blasted, as received with mill scale or oxide film, with patches of rust with greasy and oily patches, or in any other common surface state which allows electrical contact between the tank and the electrolyte, except pickled or otherwise chemically treated or contaminated.

Degreasing is not normally necessary except in extreme cases where thick coatings of grease could mask damage sites from the electrolyte. With machined, grit or shot blasted surfaces there should be a minimum of delay between machining or blasting and filling with electrolyte.

As stated above, a typical filling response is an immediate reference-to-tank voltage of +400 mV decreasing to −50 or −100 mV in the course of two or three days. This reduction can be accelerated by subjecting the surfaces of the tanks to ultra-sonic agitation at 25 kHz to 45 kHz. The number of ultra-sonic transducers required will be dictated by the size of the structure. Ultra-sonic treatment might be essential to achieve the low stable negative potentials in certain cases, for example where there is extensive rusting.

During ultra-sonic treatment a rise in electrolyte temperature is to be expected.

On terminating the ultra-sonic treatment and while the electrolyte is still warm, say 35 to 40°C, the reference-to-tank voltage will be found to be positive but decaying rapidly to a satisfactory negative level. While potentials of −250 mV are sometimes obtained, satisfactory tests can be conducted with levels of −50 mV if stable. Stability is a term which is relative to the signals expected and will be discussed in detail below.

It is necessary to calibrate the system, firstly to confirm that the system is sufficiently sensitive, and secondly to relate the changes of reference-to-tank voltage to known 'quantities' of damage.

The sensitivity is first measured by immersing known areas of freshly abraded surface into the electrolyte while measuring the current flow from the abraded area to the tank and the change in reference-to-tank potential. The system is that shown in Fig. 1, where the tank 10 is taken to represent any structure or component. Where the structure cannot itself hold the electrolyte, a plastic tank should be used and the structure immersed therein. Alternatively, the electrolyte can be contained in a vessel which itself serves as the reference electrode. To this is then applied the metal structure to be tested.

A range of rods of the same material as the tank should be prepared with tip diameters of 2, 4, 8, ... mm with the cylindrical surfaces painted or otherwise coated to prevent contact with the electrolyte. Using dry emery paper the tip of the rod should be abraded and Experiment 2 repeated. Reproducibility is poor unless a very careful technique is used for abrading, but is in any case unnecessary for there will be no attempt to relate change in referemce-to-tank potential to abraded area. What is required is a relationship between the anode-cathode current and the change in surface potential. To do this the current flowing between anode and cathode should be INTEGRATED and plotted against $\Delta V_s$ the change in reference-to-tank potential, on an x—y recorder. A relationship which is essentially linear will be obtained between the charge transferred and the change in voltage, $\Delta V_s$ during the period when there is significant current flowing. The constant $K_s$ should be evaluated where

$$\Delta V_s = K_s \cdot (\text{Charge transferred})$$

The units of $K_s$ will be Volt per Coloumb, $VC^{-1}$.

It will be found that $K_s$ is subject to a scale effect and will in fact be inversely proportional to the area of the tank exposed to electrolyte, as reason would suggest. If the area of the tank is doubled and the same charge transferred, the charge per unit area of tank will be halved, and in consequence $\Delta V_s$ will be halved. If $K_1$ is the value of $K_s$ when the tank has unit area, then for a tank of area $A_s$,

$$K_s = \frac{K_1}{A_s}$$

and

$$\Delta V_s = \frac{K_1}{A_s} \cdot (\text{Charge Transferred})$$

$K_1$ will be found to be surface state dependent and will be larger for a surface composed of smooth mill scale than for a grit blasted surface, again the reason that grit blasting increases the surface area exposed to the electrolyte.

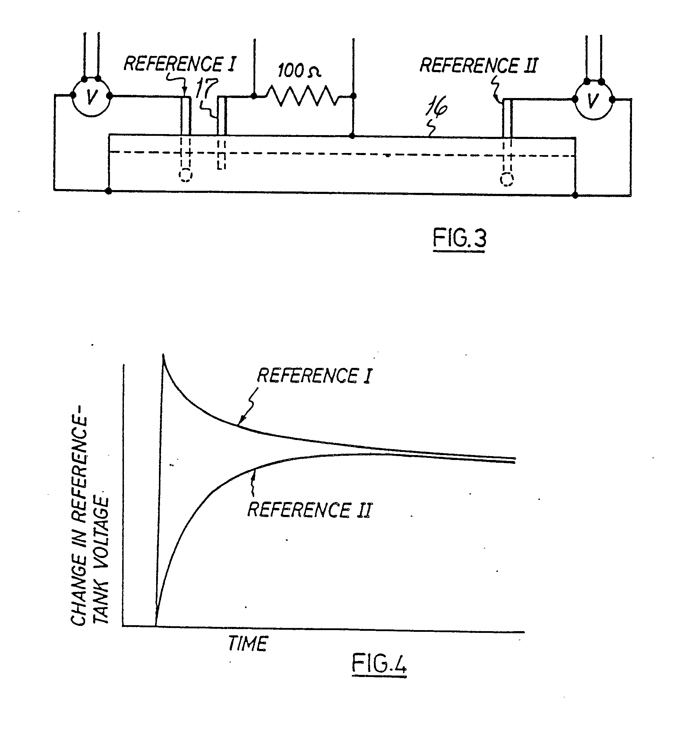

The linear relationship between $\Delta V_s$ and charge transferred will not always obtain in the first moments following damage. It will be found that in large systems, areas distant from the damage site (or abraded rod) will not experience the same transfer of charge per unit area as do areas close to the damage site. The transfer of charge will in the first stages be concentrated in the area close to the damage site, but a uniformity of charge transferred per unit area will be achieved in time. Fig. 3 shows a long shallow tank 16 with two reference electrodes I and II, the response of the two electrodes to the immersion of an abraded rod is illustrated in Fig. 4. Only when the system has achieved a uniform potential can the relationship

$$\Delta V_s = K_s \cdot (\text{Charge Transferred})$$

be applied. It will be appreciated that using a number of electrodes enables the damage to be located as well as quantified. It should also be noted that the concept of a component, structure or vessel at a particular voltage, with reference to a reference electrode, no longer has a clear meaning. It is preferable to think of the voltage measured as the voltage between the reference electrode and the electrolyte in the vicinity of the electrode, and the electrolyte voltage should be thought of in terms of a Laplacian field under the influence of the surface potential on the tank. This surface potential will be uniform except in the first moments following the appearance of damage.

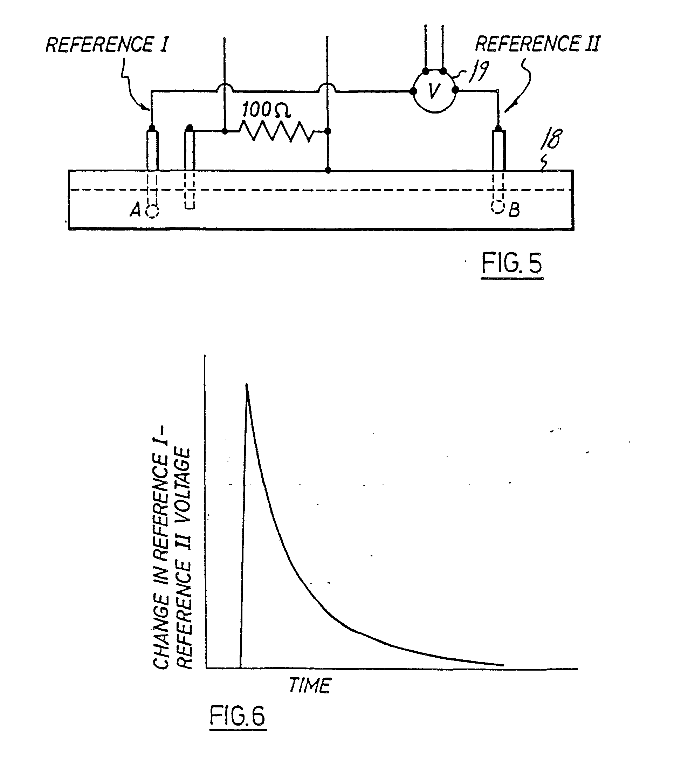

This point is most clearly demonstrated by the system shown in Fig. 5. In this system the reference electrodes I and II are not connected to the tank 19 but to each other through a high resistance voltmeter 19. The voltmeter therefore monitors the difference in electrolyte potential between locations A and B, and then abraded rod test would give the result shown in the graph of Fig. 6.

If B were infinitely far from A, then the signal would be exactly the same as obtained for reference electrode I in Fig. 4. While it may be possible to have B a substantial distance from A, it is impossible for it to be infinitely far away unless a bulkhead is built into the tank between A and B. With such a bulkhead, calomel II would be wholly unaware of the abraded rod test in compartment A.

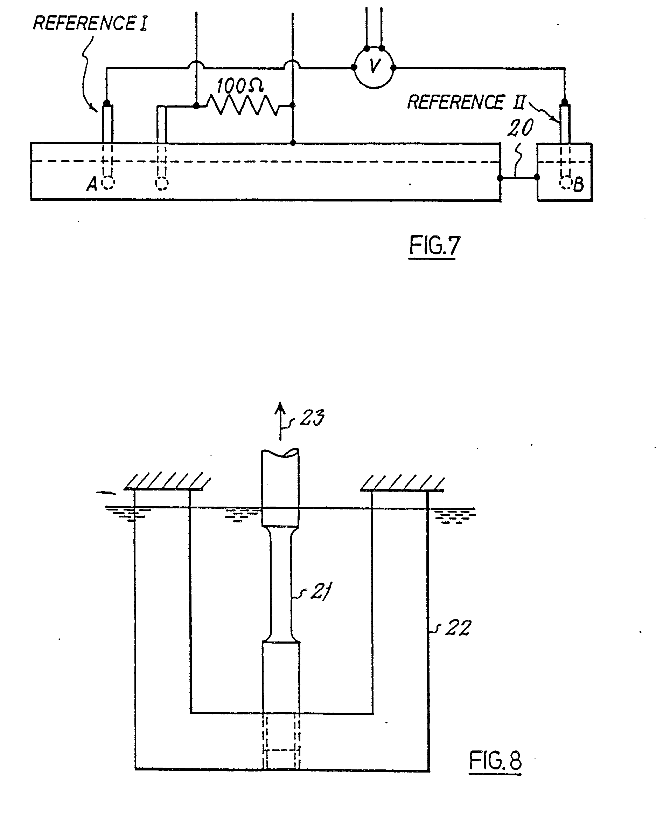

This idea can be taken one step further if compartments A and B are separate but connected by an electrical connection 20 as shown in Fig. 7. A system employing this principle could be described as using a "reference cell B". It allows reference electrode I to monitor tank A from a zero datum voltage and to eliminate voltage signals which arise from temperature effects, which, if A and B are similar, will be the same.

The above remarks apply whether or not the tank is earthed. Earthing has no effect other than to reduce the possibility of electrical noise pick-up.

Having tested the sensitivity of the system using abraded rods it is necessary to relate changes in tank potential to "quantities" of damage. A quantity of damage will be measured by the area of fresh surface exposed by a crack or by the area of surface which has undergone yielding.

Using the system shown in Fig. 1 and the notch crack specimen 15, a test should be conducted in which a crack is produced in the specimen while the current flow and change in tank potential are recorded. When the test has been completed, the cracked specimen should be removed from the electrolyte, cooled in liquid nitrogen and fractured to reveal the extent of the original crack. It is then possible to relate a crack of a particular size to a particular electrical charge and a particular change in tank surface potential. In practice, the process would be used in the reverse direction, a change in tank surface potential being interpreted as the appearance of a crack of a particular size or of the yielding of a particular area of surface. If there is reason to believe that areas of the notch crack specimen are undergoing significant deformation other than at the root of the notch, these areas should be masked with paint or by other suitable means.

A device along the lines of the one shown in Fig. 8 may be used to calibrate the response to the yielding of a known surface area. The specimen 21 to be tested is mounted in a frame 22. Only the yielding area should be exposed to the electrolyte; the rest of the device should be masked from the electrolyte. A Tensometer testing machine mounted vertically has been found to be satisfactory for loading the yielding specimen in the direction of arrow 23, with a Sangamo load cell to allow the plotting of load and change in tank potential on an x—y plotter.

Having data which gives the charge transferred per unit area of crack or per unit area of plastically strained surface, it is possible to predict the change in potential which will follow a damage incident of a given size through the relationship

$$\Delta v_s = \frac{K_1}{A_s} \cdot (\text{Charge Transferred})$$

but it should be noted that there is no way to distinguish cracking from yielding if all that is known is $\Delta V_s$. If a high level of discrimination is required, then electrodes must be placed close to the zones of interest so that the spiky signals which may be associated with crack propagation can be detected.

This presents no difficulty since it is not necessary to have the electrode itself at the point of interest, but merely a plastic extension tube or insulated metal extension tube.

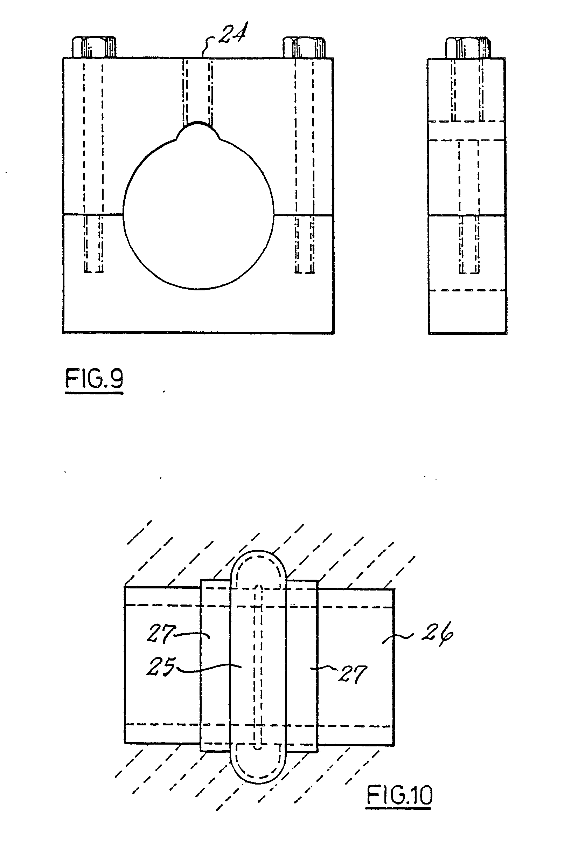

Practice in applying the calibration data may be obtained very easily by taking a tube which is sealed at one end and which has a seam weld or a butt weld or even a flat machined over a small area. The device shown in Fig. 9 should receive a bolt at 24 which has a steel ball at the tip. The device should be fitted to the tube so that the ball tip will bear on the weld or flat when screwed down sufficiently far. As the ball depresses the tube wall and forms therein a dimple, the change in reference potential is noted.

If a metallic mounting for the electrode is used, it is thought desirable to have the mounting of the same material as the tank, for there is likely to be direct electrical contact between the mounting and the tank. Mixing metals in direct contact can lead to intense electro-chemical activity and should be avoided if possible.

If a reference electrode of the same material as the tank is used, the electrode should be prepared for use by polishing it in a lathe using Grade 300 emery under a flow of electrolyte. The final polish should be given using a clean tissue soaked in electrolyte, and while wet, the electrode should be introduced into the system. This procedure ensures that the electrode is electro-chemically stable.

If access to damage is difficult, an extension tube may be fitted to the electrode body. If, for example, it is necessary to monitor a weld at the bottom of a deep tank then a tight fitting P.V.C. tube should be fitted to the glass body of the reference cell, and the end of the plastic tube should lead to the zone which is to be closely monitored. The plastic tube must be a tight fit on the reference electrode and be free of holes in the wall; otherwise the electrode will monitor electrolyte potential at points other than at the zone of interest. All the air should be removed from the tube by filling with electrolyte.

If fitting an extension tube to an electrode which is to pass through the wall of a tank the tube should be fitted to the body of the electrode, once again using a tight fit and a tube free from holes. If it is thought easier to use a metal extension tube, then the connection to the body of the electrode must be liquid tight and electrically insulated. The metal tube must nowhere make direct electrical contact with the tank. Again, the tube should be filled with electrolyte.

If, when using an extension tube, a length of tube is protruding from the tank, electrical shielding may be required to avoid the pick-up of electrical noise.

It should be remembered that a tube extension only serves a useful purpose in the period immediately following the appearance of localised damage when the surface and hence the electrolyte potential (in the vicinity of the damage zone) is higher than the average electrolyte potential.

Testing at atmospheric pressure and ambient temperature presents no special difficulties. When the tank is showing a stable potential and additional electrodes are mounted in place, with or without extension tubes, additional test instrumentation may be connected. The instrumentation will consist of one or more high resistance voltmeters and chart or digital recording of potentials. Each electrode may have its own voltmeter to give continuous recording or the electrodes may be switched into a single voltmeter in turn to give readings at prescribed time intervals. Switching is satisfactory except when the spiky signals from growing cracks is being monitored. Provision should be made for at least one x—y plot of load against potential while the rest are simply potential/time recordings.

In making provision for loading the structure care should be taken to ensure that the loading shackles play no part in the electrochemical activity of the system. If the shackles are immersed wholly or partly in the electrolyte they should be masked from the electrolyte using paint. Where painting is not practicable, at pin joints for example, a heavy coating of the protective materials used for strain gauges in liquid environments should be used. Alternatively the shackles should be designed such that a liquid tight plastic shield can be fitted. At no point during a test should fresh metal surface from the shackles be allowed to enter the electrolyte or specious damage signals will appear.

With an appropriate array of electrodes the test will reveal where damage is occurring, the nature of the damage, i.e. cracking or yielding the quantity of damage summed over the whole surface and the progress of damage in relation to load.

If it is decided that only a certain zone of a structure is to be monitored, then it may be necessary to create a container around this zone. For example if it is required to monitor a butt weld in a circular pipe then a container of the form shown in Fig. 10 could be used. A collar 25 surround the pipe 26 and is sealed against the pipe wall by circular clips 27. The collar would of course carry the necessary fittings to allow electrodes, ultra-sonic transducers and calibration specimens to be mounted.

Painting out or masking is of course another way of reducing the area of structure participating in the electrolytic processes. The criteria for selecting a coating is that it does not deteriorate in the electrolyte and that it does not crack to reveal fresh surface as the structure strains.

Given proper ultra-sonic treatment and the removal of any sludge which may result from this treatment, and a stable temperature environment, ±1°C, then a 24 hour drift of no more than 2 mV is not difficult to obtain. At this level of stability very low levels of damage may be detected. Bearing in mind the well nown Becquerel Effect, the intensity of lighting should be maintained at a constant level to improve the stability of open systems.

Sodium nitrite has been used as a corrosion inhibitor for many years but nowhere does the work so far published suggest that any damage may be measured by the change in passivation potential of the metal surface nor that ultra-sonic treatment enhances the passivation characteristics of the electrolyte.

**Claims**

1. A method of detecting and quantifying the occurrence of damage in ferrous metal structures, comprising the steps of providing an electrolytic cell wherein as one electrode, the metal structure to be monitored and at least one reference electrode are at least partially immersed in an electrolyte having properties which cause passivation of the immersed surface of the metal structure and at least partial de-passivation thereof when a flow of current to the passivated surface is established by the exposure of non-passivated surface in the event of damage to be detected and quantified, characterised in that, once the said surface has been initially passivated and subsequently partially de-passivated, any change in the electrochemical potential of the immersed metal structure is detected, wherein the electro-chemical potential of the immersed metal structure is measured by a voltmeter connected between the latter and the reference electrode, said voltmeter having a sufficiently high impedance to prevent significant current flow therethrough, wherein the system is calibrated to relate the change of potential to the amount of damage and preferably wherein said reference electrode is of the same material as said metal structure.

2. A method according to Claim 1, wherein said electrolyte is a sodium nitrite solution.

3. A method according to Claim 1 or Claim 2 wherein said electrolyte has a conductivity in the region of $0.25 \times 10^4$ $\mu\Omega^{-1}cm^{-1}$.

4. A method according to any preceding claim, wherein the internal impedance of said voltmeter is at least $2 \times 10^{12}$ ohms.

5. A method according to any preceding claim, wherein an output signal from said voltmeter is fed to a recording device.

6. A method according to any preceding claim, wherein initial passivation of said surface is accelerated by subjecting the metal structure to ultrasonic agitation.

7. A method according to Claim 6, wherein the frequency of said ultrasonic agitation is established in the region of 25 kHz.

8. A method according to any preceding claim, including a plurality of reference electrodes spaced apart and separately connected to the metal structure via a voltmeter, whereby, since the degree of change in electro-chemical potential will be dependent upon the proximity of each reference electrode to the de-passivated surface, damage to the structure may be located and quantified.

**Patentansprüche**

1. Verfahren zum Erkennen und zur mengenmäßigen Bestimmung des Auftretens von Zerstörungen in eisenhaltigen Metallstrukturen, mit den Schritten der Verwendung einer elektrolytischen Zelle, bei der die zu überwachende Metallstruktur als eine Elektrode und wenigstens eine Referenzelektrode mindestens teilweise in einen Elektrolyten eingetaucht sind, der Eigenschaften hat, die eine Passivierung der eingetauchten Oberfläche der Metallstruktur und, wenn im Falle der zu erkennenden und zu quantifizierenden Zerstörung durch das Freilegen einer nichtpassivierten Oberfläche ein Stromfluß zu der passivierten Oberfläche erfolgt, eine mindestens teilweise Depassivierung dieser Oberfläche verursachen, dadurch gekennzeichnet, daß, wenn die Oberfläche anfänglich aktiviert und nachfolgend teilweise depassiviert worden ist, jegliche Änderung im elektrochemischen Potential der eingetauchten Metallstruktur erkannt wird, wobei das elektrochemische Potential der eingetauchten Metallstruktur mit einem Voltmeter gemessen wird, welches zwischen diese Metallstruktur und die Referenzelektrode geschaltet wird, daß das Voltmeter eine hinreichend hohe Impedanz hat, um einen größeren Stromfluß durch das Voltmeter hindurch zu vermeiden, wobei das System so kalibriert wird, daß Potentialänderungen in Beziehung stehen zu dem Betrag der Zerstörung, und daß vorzugsweise die Referenzelektrode aus demselben Material besteht wie die Metallstruktur.

2. Verfahren nach Anspruch 1, bei welchem der Elektrolyt eine Sodiumnitridlösung ist.

3. Verfahren nach Anspruch 1 oder 2, bei welchem der Elektrolyt eine Leitfähigkeit im Bereich von Zeilenwechsel $0,25 \times 10^4$ $\mu\Omega cm^{-1}$ hat.

4. Verfahren nach einem der vorhergehenden Ansprüche, bei welchem die innere Impedanz des Voltmeters mindestens $2 \times 10^{-12}$ Ohm beträgt.

5. Verfahren nach einem der vorhergehenden Ansprüche, bei welchem das Ausgangssignal des Voltmeters einer Aufzeichnungsvorrichtung zugeführt wird.

6. Verfahren nach einem der vorhergehenden Ansprüche, dadurch gekennzeichnet, daß die anfängliche Passivierung der Oberfläche beschleunigt wird, indem die Metallstruktur einer Ultraschallagitation unterworfen wird.

7. Verfahren nach Anspruch 6, bei welchem die Frequenz der Ultraschallagiation im Bereich von 25 kHz eingerichtet wird.

8. Verfahren nach einem der vorhergehenden Ansprüche, mit mehreren Referenzelektroden, die mit gegenseitigen Abständen angeordnet und über ein Voltmeter separat mit der Metallstruktur verbunden sind, wodurch Zerstörungen der Struktur lokalisiert und mengenmäßig ermittelt werden, weil der Grad der Änderung des elektrochemischen Potentials von der Nähe einer jeden Referenzelektrode zur depassivierten Oberflächen abhängt.

**Revendications**

1. Procédé pour détecter et quantifier l'apparition de dommages dans des structures en métaux ferreux, qui consiste à utiliser une cellule électrolytique dans laquelle, en tant qu'électrode, la structure métallique à surveiller et au moins une électrode de référence sont au moins partiellement immergées dans une électrolyte ayant des propriétés qui provoquent la passivation de la surface immergée de la structure métallique et au moins sa partielle dépassivation lorsqu'un flux de courant vers la surface passivée est établi par l'exposition de la surface non passivée en cas de dommage à détecter et quantifier, caractérisé en ce que, une fois ladite surface initialement passivée et ensuite partiellement dépassivée, toute variation du potentiel électrochimique de la structure métallique immergée est détectée, en ce que le potentiel électrochimique de la structure métallique immergée est mesuré au moyen d'un voltmètre monté entre celle-ci et l'électrode de référence, ledit voltmètre ayant une impédance suffisamment élevée pour empêcher toute circulation notable de courant à travers celui-ci, en ce que le système est étalonné pour établir un rapport entre la variation de potentiel et la valeur du dommage, et de préférence en ce que l'électrode de référence est faite dans le même matériau que la structure métallique.

2. Procédé selon la revendication 1, caractérisé en ce que l'électrolyte est une solution de nitrite de sodium.

3. Procédé selon la revendication 1 ou la revendication 2, caractérisé en ce que l'électrolyte a une conductivité de l'ordre de $0,25 \times 10^4 \mu\Omega^{-1}cm^{-1}$.

4. Procédé selon l'une quelconque des revendications précédentes, caractérisé en ce que l'impédance interne du voltmètre est d'au moins $2 \times 10^{12}$ ohms.

5. Procédé selon l'une quelconque des revendications précédentes caractérisé en ce qu'un signal de sortie émis par le voltmètre est transmis à un dispositif d'enregistrement.

6. Procédé selon l'une quelconque des revendications précédentes caractérisé en ce qu'on accélère la passivation initiale de la surface précitée en soumettant la structure métallique à une agitation ultrasonique.

7. Procédé selon la revendication 6, caractérisé en ce que la fréquence de l'agitation ultrasonique est établie dans la zone de 25 kHz.

8. Procédé selon l'une quelconque des revendications précédentes, caractérisé en ce qu'on utilise plusieurs électrodes de référence espacées et reliées séparément à la structure métallique par l'intermédiaire d'un voltmètre, grâce à quoi, comme le degré de variation du potentiel électrochimique dépend de la proximité de chaque électrode de référence par rapport à la surface dépassivée, on peut localiser et quantifier les dommages dans la structure.

FIG.1

CHANGE IN REFERENCE -
TANK POTENTIAL

CURRENT

FIG.2                    TIME

1

FIG.3

FIG.4

REFERENCE I

REFERENCE II

100 Ω

V  19

18

A

B

FIG. 5

CHANGE IN REFERENCE I –
REFERENCE II VOLTAGE

TIME

FIG. 6

FIG.7

FIG.8

FIG.9

FIG.10